(19) Europäisches Patentamt

European Patent Office

Office européen des brevets

(11) EP 1 420 539 A2

(12) EUROPEAN PATENT APPLICATION

(43) Date of publication:
19.05.2004 Bulletin 2004/21

(51) Int Cl.⁷: H04L 1/00

(21) Application number: 03257172.1

(22) Date of filing: 13.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 14.11.2002 US 426424 P
22.01.2003 US 441738 P
12.03.2003 US 454180 P
06.08.2003 US 492807 P

(71) Applicant: Hughes Electronics Corporation
El Segundo, CA 90245 (US)

(72) Inventors:
• Border, John L.
Poolesville, Maryland 20837 (US)
• Kelly, Frank M.
Walkersville, Maryland 21793 (US)
• Baer, Matthew B.
Germantown, Maryland 20874 (US)

(74) Representative: Jackson, Richard Eric et al
Carpmaels & Ransford,
43-45 Bloomsbury Square
London WC1A 2RA (GB)

(54) **Systems and methods for selecting a transmission rate and coding scheme for use in satellite communications**

(57) A method for selecting a transmission rate and coding scheme for transmitting data packets from a remote terminal to a hub includes performing a ranging process between the hub and remote terminal. The ranging process may be repeated for each of a number of different transmission rates and coding schemes. The remote terminal may then select the appropriate transmission rate and coding scheme based on the ranging.

START

PERFORM PRE-RANGING;
DETERMINE RANGING ORDER — 410

RECEIVE IN-ROUTE GROUP DEFINITION PACKET(S) — 415

SELECT IN-ROUTE GROUP;
TRANSMIT RANGING REQUEST MESSAGE — 420

RECEIVE RANGING REQUEST MESSAGE;
TRANSMIT BAP MESSAGES TO TERMINAL — 425

SEND RANGING BURST — 430

MEASURE TIME BETWEEN START OF APERTURE AND
RECEIPT OF BURST; AVERAGE TIMES OVER A
NUMBER OF BURSTS; TRANSMIT RANGING ACK. — 435

RECEIVE RANGING ACK. MESSAGE;
MODIFY TERMINAL OFFSET IF NECESSARY;
ADJUST POWER LEVEL IF NECESSARY — 440

ADDITIONAL IN-ROUTE TYPES? — 445
YES / NO → GO TO A FIG. 4B

FIG. 4A

EP 1 420 539 A2

**Description**

RELATED APPLICATIONS

This application claims priority under 35 U.S.C. § 119 based on U.S. Provisional Application Serial No. 60/426,424, filed November 14, 2002, U.S. Provisional Application Serial No. 60/441,738 filed January 22, 2003, U. S. Provisional Application Serial No. 60/454,180, filed March 12,2003, U.S. Provisional Application Serial No. 60/479,939, filed June 19, 2003, and U.S. Provisional Application Serial No. 60/492,807 filed August 6, 2003, the disclosures of which are all incorporated herein by reference.

BACKGROUND OF THE INVENTION

Field of the Invention

The present invention relates generally to satellite communications and, more particularly, to transmitting Internet Protocol (IP) data via satellite.

Description of Related Art

Internet Protocol over Satellite (IPoS) systems have been used to transmit and receive conventional IP data. In such systems, remote terminals communicate with a hub via one or more satellites.
As users' demands for increased data throughput continue to increase, new ways of maximizing data throughput are needed to support the increased demands.
Therefore, a need exists for systems and methods that efficiently maximize data throughput in IPoS systems.

SUMMARY OF THE INVENTION

Systems and methods consistent with the present invention address these and other needs by performing a ranging process between a remote terminal and a hub for a number of different transmission rates and coding schemes. After the ranging process is complete, the remote terminal selects the best available transmission rate and coding scheme to use when transmitting data to the hub.
In accordance with the principles of the invention as embodied and broadly described herein, a system that includes at least one logic device is provided. The logic device is configured to receive a number of data packets transmitted from a hub, where each data packet includes information identifying one of a number of types. Each type may be associated with a transmission rate and coding scheme. The logic device is further configured to perform a ranging process for at least one of the types. The logic device is further configured to select a transmission rate and coding scheme based on results of the ranging process.
In another implementation consistent with the present invention, a method for establishing parameters for transmitting IP data includes transmitting, by a hub, a number of data packets to a terminal, where each data packet includes information identifying one of a number of types. Each type may be associated with one of a number of transmission rates and coding schemes. The method also includes performing a ranging process associated with each of the types and selecting a transmission rate and coding scheme based on results of the ranging process.
In still another implementation consistent with the present invention, a hub for providing access to the Internet to a number of remote terminals includes a transmitter, logic and a receiver. The transmitter is configured to transmit data packets to at least a first one of the remote terminals, where the data packets include information identifying one of a number of types. Each of the types may be associated with one of a number of transmission rates and coding schemes. The logic is configured to perform a ranging process with the first remote terminal for at least one of the types. The receiver is configured to receive data transmitted from the first remote terminal using a particular coding scheme and transmission rate based on results of the ranging.

BRIEF DESCRIPTION OF THE DRAWINGS

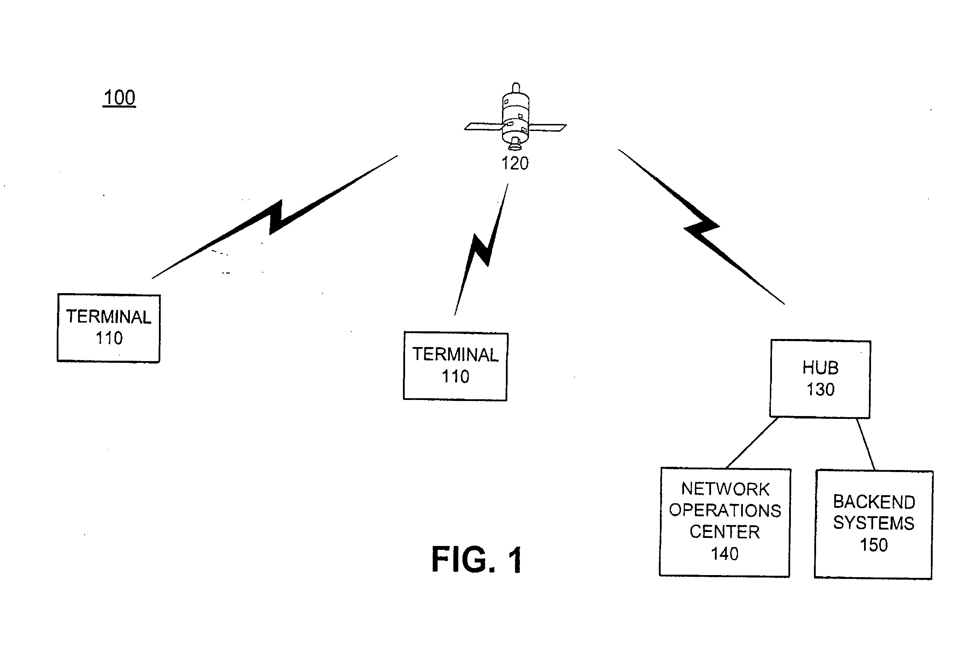

The accompanying drawings, which are incorporated in and constitute a part of this specification, illustrate the invention and, together with the description, explain the invention. In the drawings,
**[0010]** Fig. 1 is a diagram of an exemplary network in which systems and methods consistent with the present invention may be implemented;
Fig. 2 is a diagram of an exemplary terminal of Fig. 1 in an implementation consistent with the present invention;

Fig. 3 is an exemplary functional block diagram of the terminal of Fig. 1 in an implementation consistent with the present invention;

Figs. 4A and 4B are flow diagrams illustrating exemplary processing associated with performing ranging and selecting a transmission type by the terminal of Fig. 1 in an implementation consistent with the present invention; and

Figs. 5-7 are exemplary block diagrams illustrating the processing of data packets and data packet structures in accordance with an implementation consistent with the present invention.

DETAILED DESCRIPTION

The following detailed description of the invention refers to the accompanying drawings. The same reference numbers in different drawings may identify the same or similar elements. Also, the following detailed description does not limit the invention. Instead, the scope of the invention is defined by the appended claims and equivalents.

Systems, devices and methods consistent with the present invention perform a ranging process between a terminal and a hub. The ranging process may enable the terminal to efficiently establish parameters with which it will communicate with the hub and to synchronize timing requirements. After the parameters are established, a priority field may also be included in the data sent from the terminal to allow prioritization of data processing at the hub.

EXEMPLARY NETWORK

Fig. 1 illustrates an exemplary network in which methods, devices and systems consistent with the present invention may be implemented. Network 100 includes a number of terminals 110, a satellite 120, a hub 130, a network operations center 140 and backend systems 150. The number of components illustrated in Fig. 1 is provided for simplicity. It will be appreciated that a typical network 100 may include more or fewer components than are illustrated in Fig. 1.

Terminals 110 transmit and receive information over an air/free space interface to/from satellite 120. Terminals 110 may interface with user devices, such as personal computers (PCs), lap top computers, personal digital assistants (PDAs), wireless telephones, etc., to provide users with broadband IP communication services. Terminals 110 may directly connect to a user device via, for example, a universal serial bus (USB). Terminals 110 may also connect to user devices via a local area network (LAN) interface, such as an Ethernet interface.

Satellite 120 may support two-way communications with earth-based stations, such as terminals 110 and hub 130. Satellite 120 may include one or more uplink antennas and one or more downlink antennas for receiving data from and transmitting data to terminals 110 and hub 130. For example, satellite 120 may receive data transmitted from terminal 110 or hub 130 in the C-band, Ku-band, Ka-band, X-band, etc. Satellite 120 may also include transmit circuitry to permit satellite 120 to use the downlink antenna(s) to transmit data using various ranges of frequencies. For example, satellite 120 may transmit data in any of the above frequency bands (i.e., C-band, Ku-band, Ka-band, X-band) or in other frequency bands.

Hub 130 may support Internet access for a large number of terminals 110 via satellite 120. Hub 130 may access space segment resources from multiple satellites 120 and manage such resources. Network operations center 140 may manage network 100, including hub 130. For example, network operations center 140 may receive data from terminals 110 via hub 130 and determine the appropriate power levels associated with transmitting data to terminals 110. Hub 130 may then transmit uplink information to satellite 120 regarding downlink power control.

Backend systems 150 may include routers, firewalls, domain name servers (DNSs), etc. Backend systems 150 provide the interface between network 100 and an external public network, e.g., the Internet.

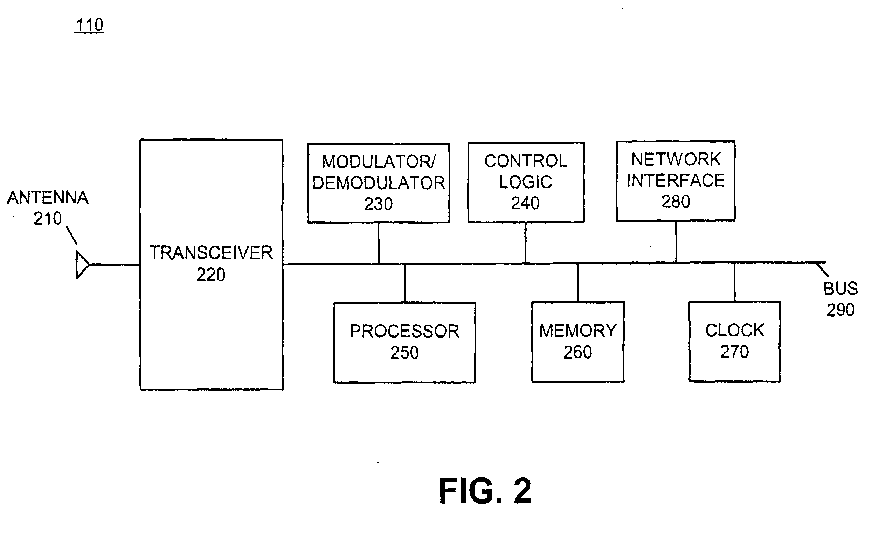

Fig. 2 illustrates an exemplary configuration of a terminal 110 consistent with the present invention. Referring to Fig. 2, terminal 110 includes antenna 210, transceiver 220, modulator/demodulator 230, control logic 240, processor 250, memory 260, clock 270, network interface 280 and bus 290.

Antenna 210 may include one or more conventional antennas capable of transmitting/receiving signals via radio waves. For example, antenna 210 may transmit/receive data in the C-band, Ku-band, Ka-band or X-band. Antenna 210 may also transmit/receive information in other frequency bands.

Transceiver 220 may include well-known transmitter and receiver circuitry for transmitting and/or receiving data in a network, such as network 100. Modulator/ demodulator 230 may include conventional circuitry that combines data signals with carrier signals via modulation and extracts data signals from carrier signals via demodulation. Modulator/demodulator 230 may also include conventional components that convert analog signals to digital signals, and vice versa, for communicating with other devices in terminal 110.

Control logic 240 may include one or more logic devices, such as application specific integrated circuits (ASICs), that control the operation of terminal 110. For example, control logic 240 may include logic circuitry that performs a convolutional coding or turbo coding operation for received data packets, as described in more detail below.

Processor 250 may include any type of conventional processor or microprocessor that interprets and executes instructions. Processor 250 may perform data processing functions relating to transmitting data from terminal 110 to hub 130.

Memory 260 may provide permanent, semi-permanent, or temporary working storage of data and instructions for use by processor 250 in performing processing functions. Memory 260 may include a conventional random access memory (RAM) or another dynamic storage device that stores information and instructions for execution by processor 250. Memory 260 may also include a conventional read only memory (ROM), an electrically erasable programmable read only memory (EEPROM) or another static or non-volatile storage device that stores instructions and information for use by processor 250. Memory may further include a large-capacity storage device, such as a magnetic and/or optical recording medium and its corresponding drive.

Clock 270 may include conventional circuitry for performing timing-related operations associated with one or more functions performed by terminal 110. Clock 270 may include, for example, one or more oscillators and one or more counters.

Network interface 280 may include an interface that allows terminal 110 to be coupled to an external network. For example, network interface 280 may include a USB interface, an Ethernet interface for communicating to a LAN, an asynchronous transfer mode (ATM) network interface and/or an interface to a cable network. Alternatively, network interface 280 may include other mechanisms for communicating with other devices and/or systems.

Bus 290 may include one or more conventional buses that interconnect the various components of terminal 110 to permit the components to communicate with one another. The configuration of terminal 110, shown in Fig. 2, is provided for illustrative purposes only. One skilled in the art will recognize that other configurations may be employed. Moreover, one skilled in the art will appreciate that a typical terminal 110 may include other devices that aid in the reception, transmission, or processing of data. It should also be understood that various components of terminal 110 may be located remotely from each other. For example, antenna 210 may be located outdoors, while other elements in terminal 110 may be located indoors.

Terminal 110, consistent with the present invention, performs processing associated with transmitting and receiving IP data, such as IPv4 or IPv6 data, via satellite 120. Terminal 110 may perform such processing, described in detail below, in response to processor 250 executing sequences of instructions contained in a computer-readable medium, such as memory 260. It should be understood that a computer-readable medium may include one or more memory devices and/or carrier waves. The instructions may be read into memory 260 from another computer-readable medium or from a separate device via network interface 280. Execution of the sequences of instructions contained in memory 260 causes processor 250 to perform the process steps that will be described hereafter. In alternative implementations, hard-wired circuitry may be used in place of, or in combination with, software instructions to implement the present invention. For example, control logic 240 and/or other devices, such as modulator/demodulator 230, may perform one or more of the acts described below. In still other alternatives, various acts may be performed manually, without the use of terminal 110. Thus, the present invention is not limited to any specific combination of hardware circuitry and software.

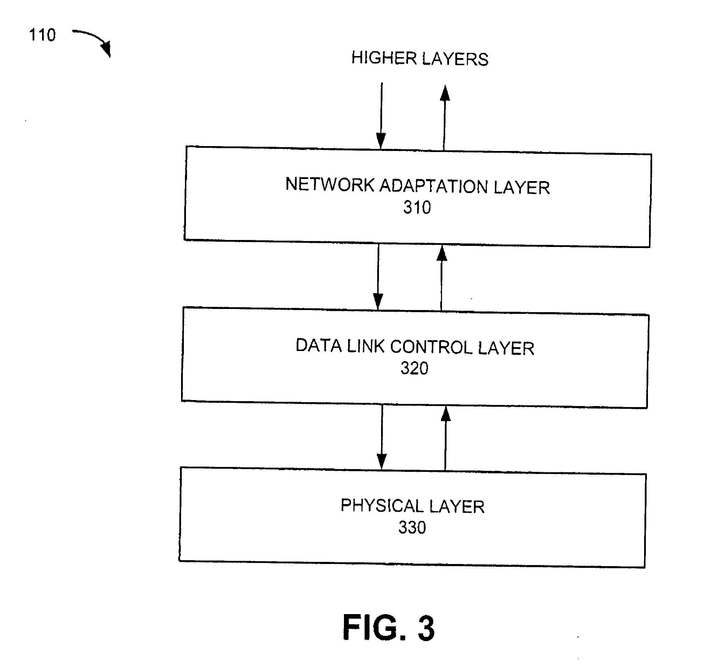

Terminals 110, as discussed above, may receive IP data packets from user devices, such as PCs, laptops, PDAs, etc. In an exemplary implementation, terminals 110 may then process the data packets and forward the data to hub 130 using an IPoS communications protocol. In this implementation, the functions performed by any of terminals 110 may be logically separated into a number of IPoS protocol related layers. For example, Fig. 3 illustrates an exemplary functional diagram of a terminal 110 consistent with the present invention. Referring to Fig. 3, terminal 110 includes a network adaptation layer 310, a data link control (DLC) layer 320 and a physical (PHY) layer 330. Layers 310-330 may communicate with each other and with higher layers, such as an application layer and transport layer. Exemplary functions associated with each of layers 310-330 are described briefly below.

Network adaptation layer 310 receives data from higher layers, e.g., an application layer, a transport layer, etc., and controls user access to radio resources needed for access to satellite 120. Network adaptation layer 310 may also be responsible for IP packet transport. This may include determining a class of service of the IP packet, application type, destination, etc. Network adaptation layer 310 may further perform traffic management functions, such as traffic shedding and policing functions for IP packets before they are forwarded for transport.

DLC layer 320 provides transport services for transmitting data over network 100. DLC layer 320 may include a satellite link control (SLC) sublayer that is responsible for transmission of packets between terminal 110 and hub 130. The SLC sublayer may generate session IDs and map incoming packets to the corresponding session, segment and reassemble variable length higher layer data packets into smaller protocol data units (PDUs), encrypt various IP PDUs, etc. DLC layer 320 may also include a media access control (MAC) sublayer that provides for data transfer, re-allocation of radio resources and error detection functions. The MAC sublayer may also provide for the transfer of data to peer MAC entities.

PHY layer 330 provides the lower level functionality related to modulation, error control and transporting data via the air interface. For example, PHY layer 330 may perform the initial acquisition, synchronization and ranging procedures with hub 130, including timing alignment of the transmissions, as described in more detail below. PHY layer 330 may also adjust the power with which terminal 110 transmits data. PHY layer 330 may further perform scrambling, coding, modulation, error correction, timing, frequency synchronization, and other functions associated with transmitting data over the air interface, as described in more detail below.

As described above, terminal 110, via layers 310-330, performs various functions associated with transmitting data to hub 130. For example, PHY layer 330 may perform operations associated with ranging and selecting an in-route transmission type based on the ranging results. In-route, as used herein, refers to transmissions from terminal 110 to hub 130. Out-route, as used herein, refers to transmissions from hub 130 to terminal 110. In other implementations, other or additional layers may be used to perform some or all of the processing described in more detail below.

Terminals 110, consistent with the present invention, use a time division multiple access (TDMA) scheme to access shared in-route channels for transmissions through satellite 120 to hub 130. TDMA requires that each terminal 110 transmit its data bursts to satellite 120 for relay to hub 130 such that the bursts start within a narrow window of time, referred to as the aperture. In an exemplary implementation for network 100, the aperture may be 125 μs for assigned traffic bursts and two milliseconds (ms) for ranging bursts. The propagation time from a terminal 110 to hub 130 through satellite 120 may vary by more than 10 ms from one terminal 110 to another, depending on the location of the particular terminal 110. This variation requires that each terminal 110 execute procedures to determine exactly when it should transmit a data burst so that it will arrive at hub 130 within the proper 125 μs aperture.

In an exemplary implementation, the timing relationship may be represented by:

$$T_{HO} = T_{H-S} + T_{S-R} + T_{RO} + T_{R-S} + T_{S-H} \qquad \text{Equation (1),}$$

where $T_{HO}$ represents hub 130 offset time (time between transmission of a super frame number packet N (SFNP$_N$) at hub 130 and the start of reception of frame N at hub 130), $T_{H-S}$ represents propagation time from hub 130 to satellite 120 (same value as $T_{S-H}$), $T_{S-R}$ represents propagation time from satellite 120 to terminal 110 (same value as $T_{R-S}$), $T_{RO}$ represents terminal 110 offset time (time between "ideal" receipt of SFNP$_N$ at a terminal 110 and the transmit time for the start of transmission for frame N at this terminal), $T_{R-S}$ represents propagation time from terminal 110 to satellite 120, $T_{S-H}$ represents propagation time from satellite 120 to hub 130, and SFNP$_N$ represents a superframe numbering packet that marks frame N (Superframe number = N/8 in the case where each superframe includes eight frames). The hub-to-satellite round-trip time, $T_{H-S} + T_{S-H}$, can also be written as $T_{H-S-H}$ and the timing relationship in equation 1 may be represented by:

$$T_{HO} = T_{H-S-H} + T_{S-R} + T_{RO} + T_{R-S} \qquad \text{Equation (2),}$$

If a terminal 110 transmits at the end of its $T_{HO}$ interval, hub 130 will receive the burst in the first burst position within the frame. If terminal 110 needs to transmit at some burst position later in the frame, it may add the time delay of this burst position to the end of the $T_{HO}$ interval to determine the time at which to transmit.

$T_{HO}$ should typically be large enough such that a terminal 110 located the farthest from satellite 120 can receive an SFNP, perform some processing on the SFNP (e.g., process two frames of data) and transmit a data burst in time to be received at hub 130 by the start of the frame number given in the SFNP. For example, in network 100, a typical value for $T_{HO}$ may be 675 ms. Terminal 110 may also establish its timing reference value $T_{RO}$ by ranging. In an exemplary implementation, a terminal 110 may determine its value for $T_{RO}$ within a small value (e.g., ± 62.5 μs of its exact current value). This allows terminal 110 to transmit a data burst such that the data burst falls within a 125 μs aperture at hub 130.

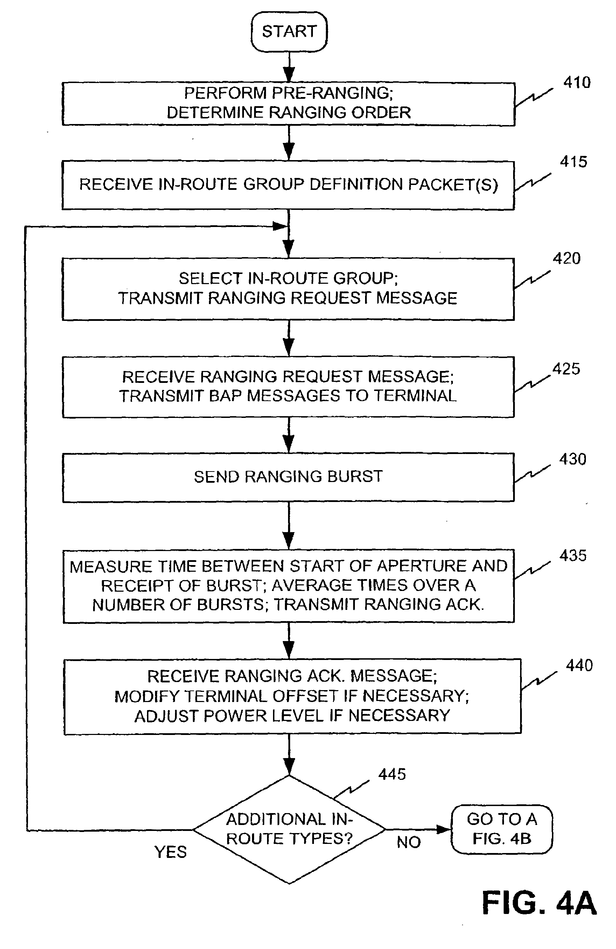

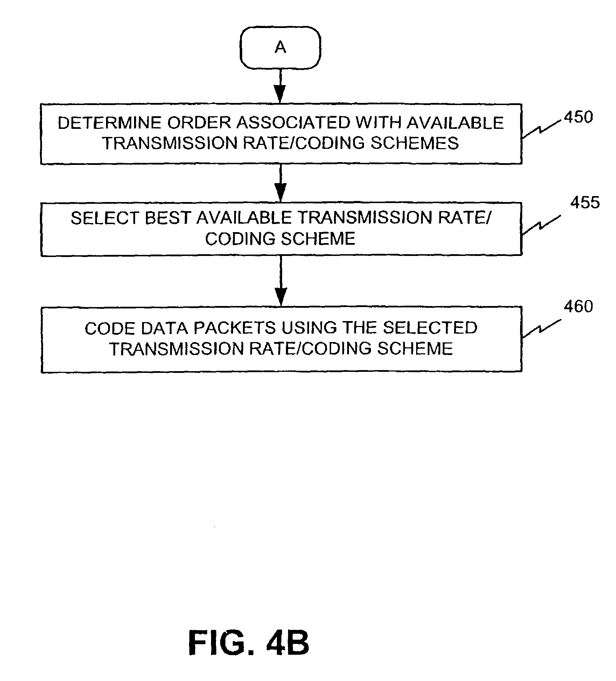

Figs. 4A and 4B are flow diagrams illustrating an exemplary ranging process and selection of a transmission rate and coding scheme, consistent with the present invention. Processing may begin when terminal 110 powers up. Terminal 110 may execute the ranging process the first time that it operates at a particular site with a particular satellite. Terminal 110 may also execute the ranging process each time a new in-route group type (i.e., transmission rate and coding method) is made available.

Prior to actually performing the ranging, terminal 110 may perform several pre-ranging activities (act 410). For example, terminal 110 may acquire the out-route carrier information, such as the frequency and symbol rate used for data transmissions to terminal 110. The out-route frequency and symbol rate allow terminal 110 to acquire and demodulate the information conveyed by the out-route carriers. Terminal 110 may also receive the IP address of hub 130 for use when transmitting data to hub 130. Terminal 110 may further synchronize its transmit frequency with the satellite out-route frequency so that terminal 110 can transmit on in-routes with the required frequency accuracy.

Terminal 110 may also estimate the distance from its location to satellite 120 using configured values for site latitude and longitude and satellite 120's longitude. These values may, for example, be pre-stored in terminal 110 or entered by an installer installing terminal 110 at a user site. Terminal 110 may convert these values into a propagation time $T_{S-R}$, which is also equal to $T_{R-S}$.

For example, from equation 2 above, $T_{RO} = T_{HO} - T_{H-S-H} - (T_{S-R} + T_{R-S})$, which can also be rewritten as $T_{RO} = T_{HO} - T_{H-S-H} - 2T_{S-R}$. The values for $T_{HO}$ and $T_{H-S-H}$ may be known from information in the SFNPs and the value of $T_{S-R}$ may be initially estimated, as described above. This enables terminal 110 to provide an initial estimate for $T_{RO}$. The ranging process, described in detail below, may help terminal 110 determine the value of $T_{RO}$ more precisely.

Terminal 110 may also determine the ranging order for each in-route group type (act 410). An in-route group type refers to a set of in-route carriers that use the same PHY layer 330 parameters, such as transmission rate and coding scheme, for a group of logical control and traffic channels. In an exemplary implementation, network 100 may include terminals 110 that support the following in-route group types: 64 kilo symbols per second (ksps) with convolutional coding, 128 ksps with convolutional coding, 256 ksps with convolutional coding, 128 ksps with turbo coding and 256 ksps with turbo coding.

The ranging order may, for example, be pre-stored in terminal 110. In an exemplary implementation, terminal 110 may perform ranging for in-route group types in the following order: 1) 64 ksps with convolutional coding, 2) 128 ksps with turbo coding, 3)128 ksps with convolutional coding, 4) 256 ksps with turbo coding and 5) 256 ksps with convolutional coding. Other in-route group types using different coding schemes and transmission rates may also be supported in alternative implementations and terminal 110 may perform the ranging process in different orders.

After the pre-ranging activities are completed, terminal 110 may receive multiple in-route group definition packets (IGDPs) from hub 130 describing different in-route group types (act 415). These IGDPs include information indicating the in-route transmission rate and coding scheme that may be used to transmit data to hub 130. Terminal 110 may receive multiple IGPDs that are of the same type (i.e., identify the same transmission rate and coding method). These IGDPs may be received from hub 130 in one or more superframes. For example, as discussed previously, a superframe may consist of eight frames. Each frame may have a duration of 45 msec and each frame may be divided into a number of slots N. The number of slots per frame, N, may be based on the transmission rate and type of encoding. Terminal 110 may wait a number of superframe times (e.g., three superframes times having a duration of 360 msec each or a total of 1080 msec) after achieving superframe synchronization to ensure that it has received and stored a full cycle of IGPDs.

Terminal 110 may then select an in-route group of the desired type in accordance with the ranging order (act 420). For example, terminal 110 may select an in-route group corresponding to 64 ksps with convolutional coding, if an IGPD identifying such a group type was received. Terminal 110 may also randomly select an unallocated ranging logical channel from those whose location (e.g., frequency and burst position within a frame) are described in the IGDPs. Terminal 110 may then transmit an in-route unallocated packet with a ranging request message in the selected unallocated ranging logical channel (act 420). Terminal 110 may transmit the ranging request message at a default starting power level and may transmit the message based on the initial estimate for $T_{RO}$, described above with respect to equations 1 and 2.

Hub 130 may receive the ranging request message from terminal 110 (act 425). In response, hub 130 may send a series of bandwidth allocation packets (BAPs) to terminal 110 specifying an in-route, a frame number, a burst location, and burst length for a ranging burst that terminal 110 should send to hub 130 (act 425).

Terminal 110 may respond to each BAP allocation by sending a single ranging burst with the prescribed characteristics (act 430). For example, terminal 110 may send a null data burst (e.g., containing all zeroes or all ones) in the assigned location. If terminal 110 received no response (i.e., no BAP message) to its ranging request within a predetermined period of time, terminal 110 may increase its power slightly and re-transmit the ranging request. For the discussion below, assume that terminal 110 received the BAP message and transmitted the null data burst.

Hub 130 receives the null data burst in the assigned location from terminal 110 and measures the time between the start of the aperture at hub 130 and the receipt of the burst from terminal 110 (act 435). This aperture, as described above, may be 2 msec for a ranging burst, as opposed to 125 μs for assigned bursts from terminals that have already ranged.

Hub 130 may measure the time between the start of the aperture and the receipt of the ranging burst for each ranging burst that was received. After hub 130 has measured the time for the last ranging burst that was received, hub 130 may average the times between the start of the aperture and the receipt of the ranging burst over the number of ranging bursts that were received (act 435). Hub 130 may further send a ranging acknowledgement command packet to terminal 110 (act 435). The ranging acknowledgement command packet may include this average time in a timing adjustment field in units of 0.1 μs.

Terminal 110 receives the ranging acknowledgment command packet from hub 130 and increases or decreases its original estimate of $T_{RO}$ so that the timing adjustment field would be a predetermined, fixed value if terminal 110 were to transmit another ranging burst (act 440). This predetermined value is a function of the in-route transmission rate and coding method. For example, if the predetermined value should be 500 μs, and the timing adjustment field value is 1,234.5 μs, then terminal 110 should decrease its value for $T_{RO}$ by 734.5 μs (1,234.5 μs - 500 μs) so that its

bursts will arrive at hub 130 500 µs after the start of the receive aperture or 734.5 µs earlier than originally estimated.

Terminal 110 stores the current values of $T_{RO}$ and the round-trip time from hub 130 to satellite 120, $T_{H-S-N}$, in nonvolatile memory, such as memory 260 (Fig. 2). Terminal 110 may use these values to compensate for changes in distance to satellite 120 and to resume operation after an interruption.

The ranging acknowledgment command may also include a signal-to-noise ratio ($E_b/N_o$) based on measurements made at hub 130. Terminal 110 may compare the received $E_b/N_o$ to a target $E_b/N_o$ contained in an $E_b/N_o$ target field contained within the IGDP associated with the in-route group type to which terminal 110 is ranging. Terminal 110 may adjust its transmit power level for the particular in-route group type based on the comparison, if necessary (act 440).

Terminal 110 may then determine if any additional in-route groups of a different type have been received in an IGDP (act 445). That is, terminal 110 determines if an IGDP for a different group type (i.e., different transmission rate and/or different coding scheme) than the group in which the ranging has already been performed has been received. If an additional in-route group type has been received, processing returns to act 420. Terminal 110 then performs the ranging process for the additional in-route group of the different type.

In the above manner, terminal 110 may perform ranging with hub 130 for each in-route group type so that terminal 110 will be able to synchronize timing and adjust the uplink power levels for transmissions from terminal 110 to hub 130 when using any of the particular in-route types. In addition, a number of failure conditions may occur when terminal 110 attempts to range on a particular in-route type. For example, a failure may occur when no unallocated ranging logical channels are defined in any of the in-route groups of the desired type. Another failure condition may occur when terminal 110 receives no response to a ranging request message transmitted at its maximum power or terminal 110 receives no ranging acknowledgement message a predetermined period of time after sending a data burst. A further failure condition may occur when the received $E_b/N_0$ field in the ranging acknowledgment command is below the $E_b/N_0$ minimum field in the IGDP for this in-route group.

If no additional in-route group of a different type has been received, the ranging process may end and terminal 110 may select the in-route transmission type to be used for in-route transmissions to hub 130, as further described with respect to Fig. 4B.

Fig. 4B illustrates exemplary processing for selecting the in-route type for use when transmitting data from terminal 110 to hub 130. Processing may begin by terminal 110 identifying the order in which it will select the in-route type (act 450). In an exemplary implementation, the order may be the following: 1) 256 ksps with turbo coding; 2) 128 ksps with turbo coding; 3) 256 ksps with convolutional coding; 4) 128 ksps with convolutional coding; and 5) 64 ksps with convolutional coding. This order may be pre-stored in terminal 110, such as in memory 260 (Fig. 2). In the exemplary order above, terminal 110 may select the turbo coding option over the convolutional coding option, even at the expense of a lower rate (i.e., select 128 ksps with turbo coding over 256 ksps with convolutional coding) due to various factors associated with turbo coding, such as increased error protection.

Next, terminal 110 may select the best available in-route type based on the pre-stored order and results of the ranging (act 455). For example, if ranging for an in-route type having a 256 ksps rate with turbo coding was successful, terminal 110 selects the 256 ksps rate with turbo coding as the in-route type. If ranging for the 256 ksps and turbo coding was not successful or not performed, terminal 110 may select the 128 ksps rate with turbo coding. Terminal 110 continues in this manner using the stored order until a type (i.e., a coding scheme and transmission rate) are selected. Terminal 110 may then use the selected transmission rate and coding scheme when transmitting in-route messages to hub 130 (act 460).

After ranging has been completed and terminal 110 has selected its transmission rate and coding scheme, terminal 110 may transmit data packets received from a user device, such as a PC connected to terminal 110, using the selected coding rate and scheme.

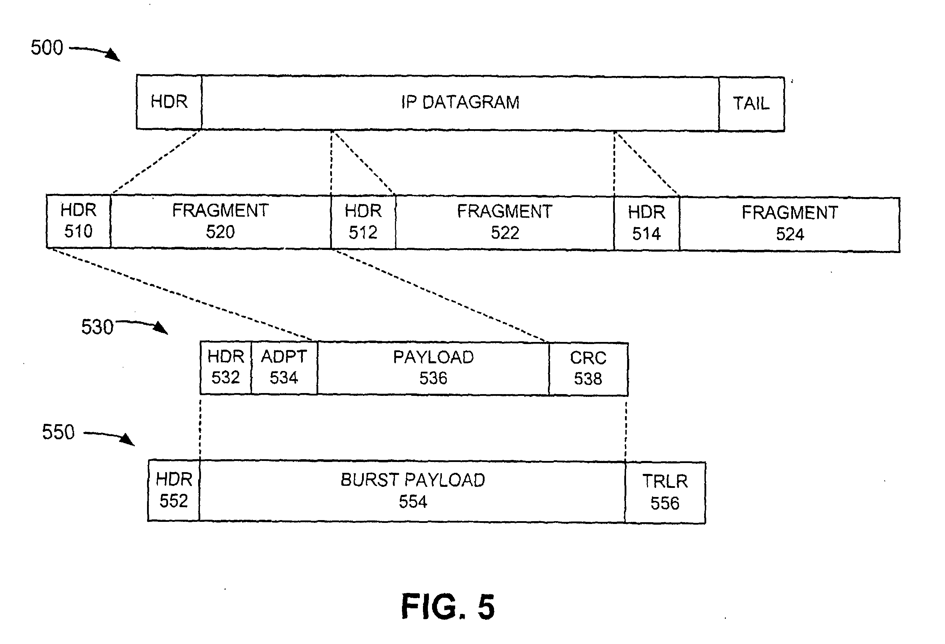

For example, assume that terminal 110 receives data packets from a user device. Network adaptation layer 310 (or another higher layer) may receive the data packet(s) in accordance with the IPoS protocol. Fig. 5 illustrates an exemplary IP datagram that may be received by terminal 110. Referring to Fig. 5, IP datagram 500 may include a number of packets and may include an IP header and a tail portion. Network adaptation layer 310 may forward IP datagram 500 to DLC layer 320.

DLC layer 320 may fragment the IP datagram 500 into a number of datagram fragments, as illustrated in Fig. 5. For example, referring to Fig. 5, SLC sublayer of DLC layer 320 may break IP datagram 500 into a number of fragments labeled 520, 522 and 524. SLC sublayer may also attach a header, labeled 510, 512 and 514, to each fragment. The headers 510-514 may correspond to the header attached to the IP datagram 500. The MAC sublayer of DLC layer 320 may further generate a MAC PDU based on each fragment. For example, the MAC sublayer may take datagram fragment 520 and its associated header 510 and encapsulate this data in payload 536 of MAC PDU 530, as illustrated in Fig. 5. The MAC sublayer may also insert a MAC header field 532 and an adaptation field 534 to the front of MAC PDU 530 and a CRC field 538 at the end of MAC PDU 530. MAC header 532, as described in more detail below, may include addressing information and other information based on the type of coding used to encode the MAC PDUs and the type of channel used to transmit the data to satellite 120. Adaptation field 534, as described in more detail below, may provide management and control information and may also be used for padding the MAC PDU 530. CRC field 538 may be used to detect errors in the transmission of MAC PDU 530.

The MAC sublayer generates MAC PDUs 530 for each of the data fragments in a similar manner. The MAC sublayer may forward the MAC PDUs 530 to PHY layer 330.

PHY layer 330 receives the MAC PDUs 530 from the MAC sublayer. PHY layer 330 generates a physical layer burst 550 using the MAC PDUs, as illustrated in Fig. 5. Referring to Fig. 5, burst 550 includes a header 552, burst payload 554 and trailer 556. PHY layer 330 inserts the MAC PDU 530 into the burst payload 554. PHY layer 330 also attaches header 552 and trailer 556 to the burst payload 554. PHY layer 330 may also scramble, encode and modulate the burst 550 using carrier signals for transmission over one or more channels. In an exemplary implementation, PHY layer 330 may use either a turbo coding scheme or a convolutional coding scheme to encode the data, based on which in-route type was selected as described above with respect to Fig. 4B. Terminal 110 may then transmit the burst 550 to hub 130 using logical channels. Each burst 550 may be transmitted over a block of consecutive slots associated with a time interval defined by an in-route bandwidth allocation procedure. Each assigned interval consists of a sequence of slots within the multifrequency TDMA structure defined at PHY layer 330.

As described above, terminal 110 may generate data bursts 550 for transmission to hub 130. The data bursts 550 may include user, control and management information and may be transmitted in network 100 via logical channels. The logical channels may be unidirectional and may be defined for both out-route and in-route directions. In an exemplary implementation, the in-route logical channels may include unallocated channels and allocated channels. Unallocated channels may be shared by multiple terminals 110 using a contention access procedure. Unallocated channels may be primarily used for control messages, such as bandwidth allocation requests and ranging requests. Allocated channels may include slots or sequences of slots in an allocated time interval that are dedicated to a specific terminal 110 for the transmission of user information. In either case, the in-route logical channels provide point-to-point connectivity from a terminal 110 to hub 130 using narrowband channels.

MAC header 532 (Fig. 5) may also vary based on whether the data burst is being transmitted over an allocated or an unallocated channel and the type of coding used to encode the data burst. For example, MAC header 532 may include a particular number of bytes based on the type of coding used to code the data. In an exemplary implementation, header 532 may include six bytes for turbo coding and nine bytes for convolutional coding. Adaptation field 534 may include 0 to M bytes and may be used to provide management and control information, such as remote configuration information or ranging requests. Adaptation field 534 may also be used for padding to ensure that MAC PDU 530 fits the aggregated payload of the group of bursts.

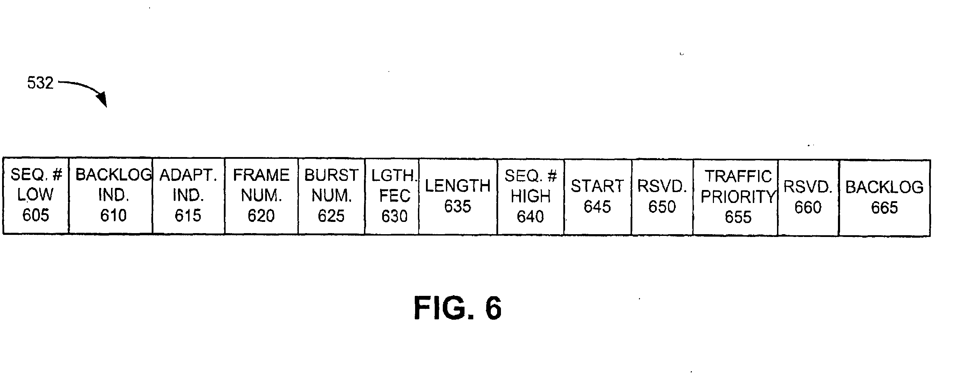

Fig. 6 illustrates an exemplary MAC header 532 in an implementation consistent with the present invention for allocated channels coded using a convolutional coding scheme. Referring to Fig. 6, MAC header 532 includes a sequence number low field 605, backlog indicator field 610, an adaptation indicator field 615, a frame number field 620, a burst number field 625, a length forward error correction (FEC) field 630, a length field 635, a sequence number high field 640, a start of new IP datagram field 645, a reserved field 650, a traffic priority field 655, a reserved field 660 and a backlog field 665.

Sequence number low field 605 contains the eight least significant bits (LSBs) of the sequence number of the packet. The sequence number may be used to identify a packet for retransmission purposes. Backlog indicator field 610 indicates the presence of backlog field 665. For example, if the backlog indicator field 610 is set to "1", this indicates the presence of a backlog field 665. Adaptation indicator field 615 may indicate the presence/absence of adaptation field 534 (Fig. 5). For example, if adaptation indicator field 615 is set to "0", adaptation field 534 may be present. Frame number field 620 may contain the two LSBs of the frame number. Burst number field 625 indicates the slot in the frame in which this burst was transmitted. Hub 130 may use this information to uniquely identify the source and destination IP address. Length FEC field 630 indicates the FEC value for the burst length. Length field 635 indicates the length of the burst, including all the bytes starting with the backlog indicator field 610 through the CRC field 538 (Fig. 5). Sequence number high field 645 contains the eight most significant bits (MSBs) of the sequence number field that are used for the retransmission protocol. Start of new IP datagram field 654 indicates if the following datagram is the start of a new IP datagram or the continuation of a previous IP datagram. For example, a value of "1" may indicate the start of a new IP datagram. Reserved fields 650 and 660 may be reserved for future use and may be ignored by hub 130 on reception.

Traffic priority field 655 may indicate the priority level of the datagram at the beginning of the burst. In some cases, a preempted datagram may continue in the current burst. In this case, the continuing datagram may be at a different priority level than the datagram at the beginning of the burst. In an exemplary implementation, traffic priority field 655 may be two bits in length and may represent one of four different priority levels with a value of zero representing the highest priority.

Backlog field 665 may be a 2-byte field that stores prioritized backlog information. For example, backlog field 665 may provide hub 130 with information indicating the amount of data that terminal 110 has that is backlogged, i.e., remains to be sent. Hub 130 may use this information when allocating in-route bandwidth to a number of terminals 110. The first byte in backlog filed 665 may provide the total backlog in bytes. The total backlog may be encoded as a floating point number with a 2-bit exponent field and a 6-bit mantissa that may be rounded by terminal 110. In an exemplary implementation, the maximum value represented by backlog field 665 may be 64K, which may represent a maximum queue size to be tracked. The 64K backlog may represent the amount of data that will fully occupy a 256 ksps in-route burst for two seconds. The second byte in backlog field 665 identifies the highest priority for which a backlog exists. This information may be represented by the two highest order bits in the second byte. The remainder of the second byte of backlog field 665 may identify the percentage of the backlog that belongs to the priority indicated by the two higher-order bits. The percentage may be represented in 1/64 units.

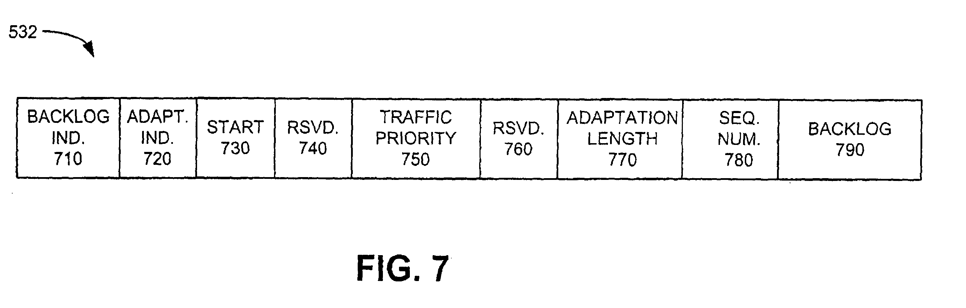

Fig. 7 illustrates an exemplary MAC header 532 for allocated channels coded using a turbo coding scheme. Referring to Fig. 7, MAC header 532 includes backlog indicator field 710, adaptation indicator 720, start field 730, reserved field 740, traffic priority field 750, reserved field 760, adaptation length field 770, sequence number field 780 and backlog field 790. Fields 710, 720, 730, 740, 750, 760 and 790 may contain information similar to their corresponding fields discussed with respect to MAC header 532 in Fig. 6. Adaptation length field 770 may indicate the number of bytes used by adaptation field 534 if adaptation indicator 720 is set. For example, a value of "0" may indicate that the adaptation field 534 is two bytes long and a value of "1" may indicate that the adaptation field 534 is one byte long. Sequence number field 780 may be used for a retransmission protocol and may include the byte address of the first byte of the encapsulated payload or IP fragment.

As described above, MAC header 532 in Fig. 6 for convolutionally coded data and MAC header 532 for turbo coded data both include a traffic priority field (fields 655 and 750). Traffic priority fields 655 and 750 enables hub 130 to process received data packets in accordance with the assigned priority. For example, terminal 110 may transmit an IP data burst 550 (Fig. 5) with a traffic priority field (655 or 750), depending on the type of coding used. Hub 130 receives the data burst 550, identifies the traffic priority and processes the packets based on the priority information included in the data burst. In this manner, network 100 supports traffic prioritization, thereby enabling users to have more important data processed more quickly by hub 130.

As described above, physical layer bursts 550 (Fig. 5) may be encoded and modulated via carrier signals for transmission to hub 130 via satellite 120. In an exemplary implementation consistent with the present invention, physical layer 330 may implement a conventional convolutional coding scheme with one of a number of different transmission rates. Alternatively, physical layer 330 may implement a turbo coding scheme with one of a number of different rates for coding and transmitting data bursts. Any conventional convolutional coding scheme or turbo coding scheme may be used in implementations consistent with the present invention and the details of such coding schemes are not disclosed herein in order not to unduly obscure the thrust of the present invention. One exemplary turbo coding scheme that may be used in implementations consistent with the present invention is described in detail in co-pending U.S. Patent application No. _____, (attorney docket number PD-203020), entitled "Systems and Methods for Transmitting Internet Protocol Data Via Satellite," the contents of which are hereby incorporated herein by reference.

Systems and methods consistent with the present invention perform ranging for a number of different in-route group types and select an in-route type based on results of the ranging. This provides an efficient manner in which to select a transmission scheme for transmitting data from terminal 110 to hub 130. In addition, priority information may be included with data sent from terminal 110, thereby allowing hub 130 to prioritize the processing of the data.

The foregoing description of preferred embodiments of the present invention provides illustration and description, but is not intended to be exhaustive or to limit the invention to the precise form disclosed. Modifications and variations are possible in light of the above teachings or may be acquired from practice of the invention. For example, while series of acts have been described with respect to Figs. 4A and 4B, the order of the acts may be modified in other implementations consistent with the present invention. Moreover, non-dependent acts may be performed in parallel.

In addition, the present invention has been described as performing several ranging processes for different transmission rates/coding schemes in a predetermined order and then selecting the best available coding scheme/ transmission rate. In other implementations, the ranging process associated with the best available transmission rate/ coding scheme may be performed first and if successful, that particular transmission rate/coding scheme may be selected. For example, if the 256 ksps rate with turbo coding is the best available rate/scheme (i.e., first in the predetermined order of selections), terminal 110 may perform ranging for this type first. If the ranging is successful, terminal 110 may then select the 256 ksps rate with turbo coding. This may enable terminal 110 to save processing time associated with ranging and the selection of the transmission rate/scheme.

No element, act, or instruction used in the description of the present application should be construed as critical or essential to the invention unless explicitly described as such. Also, as used herein, the article "a" is intended to include one or more items. Where only one item is intended, the term "one" or similar language is used.

The scope of the invention is defined by the claims and their equivalents.

**Claims**

1. A system, comprising:

   at least one logic device configured to:

   receive a plurality of data packets transmitted from a hub, each data packet including information identifying one of a plurality of types, wherein each of the plurality of types is associated with one of a plurality of transmission rates and coding schemes,
   perform a ranging process associated with at least one of the plurality of types, and
   select a transmission rate and coding scheme based on results of the ranging process.

2. The system of claim 1, wherein when performing the ranging process, the at least one logic device is configured to:

   transmit a ranging request message to the hub, and
   receive a bandwidth allocation packet from the hub, the bandwidth allocation packet identifying characteristics associated with a data burst.

3. The system of claim 2, wherein when performing the ranging process, the at least one logic device is further configured to:

   transmit a data burst with the identified characteristics to the hub.

4. The system of claim 1, wherein when selecting the transmission rate and coding scheme, the at least one logic device is configured to:

   select the transmission rate and coding scheme based in part on a predetermined order.

5. The system of 4, wherein the predetermined order comprises a 256 kilo symbols per second (ksps) rate with a turbo coding scheme as a first selection, a 128 ksps rate with a turbo coding scheme as a second selection, a 256 ksps rate with a convolutional coding scheme as a third selection and a 128 ksps rate with a convolutional coding scheme as a fourth selection.

6. The system of claim 1, wherein the at least one logic device is further configured to:

   receive data packets from a user device coupled to the at least one logic device,
   encode the data packets from the user device using the selected coding scheme, and
   modulate the encoded data packets, wherein the modulated data comprises at least one media access control (MAC) protocol data unit (PDU), the at least one MAC PDU including a MAC header, wherein the MAC header includes a priority field.

7. The system of claim 1, wherein the priority field identifies one of four possible priorities and the hub processes the MAC PDU based on the identified priority.

8. The system of claim 1, wherein when performing the ranging process, the at least one logic device is configured to:

   receiving a ranging acknowledgement command from the hub, the ranging acknowledgement command including a timing adjustment value, wherein the at least one logic device is further configured to:

   use the timing adjustment value when transmitting data to the hub.

9. The system of claim 1, wherein the at least one logic device is further configured to:

   identify the transmission rate and coding scheme for each of the plurality of types included in the received data packets, and
   skip the ranging process for a particular type based on capabilities of the system.

10. A method for establishing parameters for transmitting Internet Protocol (IP) data, comprising:

transmitting, by a hub, a plurality of data packets to a terminal, each data packet including information identifying one of a plurality of types, wherein each type is associated with one of a plurality of transmission rates and coding schemes;

performing a ranging process associated with each of the plurality of types; and

selecting a transmission rate and coding scheme based on results of the ranging process.

**11.** The method of claim 10, further comprising:

selecting the transmission rate and coding scheme based in part on a predetermined order.

**12.** The method of claim 11, wherein the predetermined order comprises a 256 kilo symbols per second (ksps) rate with a turbo coding scheme as a first selection, a 128 ksps rate with a turbo coding scheme as a second selection, a 256 ksps rate with a convolutional coding scheme as a third selection and a 128 ksps rate with a convolutional coding scheme as a fourth selection.

**13.** The method of claim 10, further comprising:

receiving, by the terminal, data packets from a user device;

encoding the data packets from the user device using the selected coding scheme; and

modulating the encoded data packets, wherein the modulated data comprises at least one media access control (MAC) protocol data unit (PDU), the at least one MAC PDU including a MAC header, wherein the MAC header includes a priority field.

**14.** The method of claim 13, wherein the priority field identifies one of four possible priorities, the method further comprising:

identifying, by the hub, a priority of the MAC PDU based on information included in the priority field; and

processing, by the hub, the MAC PDU based on the identified priority.

**15.** The method of claim 10, wherein the performing the ranging process comprises:

transmitting, by the hub, a ranging acknowledgement command, the ranging acknowledgement command including a timing adjustment value,

receiving, by the terminal, the ranging acknowledgement command, and

using, by the terminal, the timing adjustment value when transmitting data to the hub.

**16.** The method of claim 10, wherein the performing the ranging process comprises:

identifying, by the terminal, the transmission rate and coding scheme for each of the plurality of types included in the data packets, and

skipping the ranging process for a particular type based on capabilities of the terminal device.

**17.** The method of claim 10, wherein the performing the ranging process comprises:

transmitting, by the terminal, a ranging request message,

receiving, by the hub, the ranging request message,

transmitting, by the hub, a bandwidth allocation packet, the bandwidth allocation packet identifying characteristics associated with a data burst,

receiving, by the terminal, the bandwidth allocation packet,

transmitting, by the terminal, a data burst with the identified characteristics to the hub,

receiving, by the hub, the data burst,

transmitting, by the hub, a ranging acknowledgement message, and

receiving, by the terminal, the ranging acknowledgement message.

**18.** A system for transmitting Internet Protocol data, comprising:

means for receiving IP data packets at a terminal device;

means for performing a plurality of ranging processes, each ranging process being associated with a different coding scheme and transmission rate; and
means for selecting the transmission rate and coding scheme based on results of the ranging processes.

19. The system of claim 18, wherein the means for selecting selects the transmission rate and coding scheme based in part on a predetermined order of transmission rates and coding schemes.

20. The system of claim 19, wherein the predetermined order identifies turbo coding schemes as preferable to convolutional coding schemes.

21. A hub for providing access to the Internet to a number of remote terminals, comprising:

a transmitter configured to transmit data packets to at least a first one of the remote terminals, the data packets including information identifying one of a plurality of types, wherein each of the plurality of types is associated with one of a plurality of transmission rates and coding schemes;
logic configured to perform a ranging process with the first remote terminal for at least one of the plurality of types; and
a receiver configured to receive data transmitted from the first remote terminal using a particular coding scheme and transmission rate based on results of the ranging.

22. The hub of claim 21, wherein when performing the ranging process, the logic is configured to:

receive a ranging request message from the first remote terminal,
transmit at least one bandwidth allocation packet to the first remote terminal, the at least one bandwidth allocation packet identifying characteristics associated with a data burst,
receive a data burst from the first remote terminal in response to each of the least one bandwidth allocation packet, and
transmit a ranging acknowledgement message to the first remote terminal.

23. The hub of claim 22, wherein the ranging acknowledgement message includes a timing adjustment value for use by the first terminal when transmitting data to the hub.

24. The hub of claim 22, wherein the logic is further configured to:

measure a time value between a start of a predetermined window of time and a receipt of each of the data bursts transmitted in response to each of the least one bandwidth allocation packets,
average the time values, and
include the average time value in the ranging acknowledgement message.

25. The hub of claim 21, wherein the data transmitted from the first remote terminal includes priority information, and the logic is further configured to:

process the data based on the priority information.

26. A terminal configured to transmit and receive data packets via satellite, comprising:

a memory configured to store information identifying a plurality of transmission rates and coding schemes associated with transmitting data packets and an order for selecting one of the transmission rates and coding schemes; and
at least one logic device configured to:

perform a ranging process associated with at least one of the plurality of transmission rates and coding schemes,
select the transmission rate and coding scheme based on the ranging process and the order stored in the memory, and
use the selected transmission rate and coding scheme when transmitting data packets via satellite.

27. The terminal of claim 26, wherein when performing the ranging process, the at least one logic device is configured to:

perform the ranging process for at least two of the plurality of transmission rates and coding schemes.

100

120

TERMINAL
110

TERMINAL
110

HUB
130

NETWORK
OPERATIONS
CENTER
140

BACKEND
SYSTEMS
150

**FIG. 1**

EP 1 420 539 A2

FIG. 2

110

HIGHER LAYERS

```
┌─────────────────────────────────────┐
│   NETWORK ADAPTATION LAYER           │
│             310                      │
└─────────────────────────────────────┘

┌─────────────────────────────────────┐
│    DATA LINK CONTROL LAYER           │
│             320                      │
└─────────────────────────────────────┘

┌─────────────────────────────────────┐
│        PHYSICAL LAYER                │
│             330                      │
└─────────────────────────────────────┘
```

**FIG. 3**

EP 1 420 539 A2

START

PERFORM PRE-RANGING;
DETERMINE RANGING ORDER — 410

RECEIVE IN-ROUTE GROUP DEFINITION PACKET(S) — 415

SELECT IN-ROUTE GROUP;
TRANSMIT RANGING REQUEST MESSAGE — 420

RECEIVE RANGING REQUEST MESSAGE;
TRANSMIT BAP MESSAGES TO TERMINAL — 425

SEND RANGING BURST — 430

MEASURE TIME BETWEEN START OF APERTURE AND
RECEIPT OF BURST; AVERAGE TIMES OVER A
NUMBER OF BURSTS; TRANSMIT RANGING ACK. — 435

RECEIVE RANGING ACK. MESSAGE;
MODIFY TERMINAL OFFSET IF NECESSARY;
ADJUST POWER LEVEL IF NECESSARY — 440

445

ADDITIONAL IN-
ROUTE TYPES?

YES

NO → GO TO A
FIG. 4B

**FIG. 4A**

A

DETERMINE ORDER ASSOCIATED WITH AVAILABLE
TRANSMISSION RATE/CODING SCHEMES    450

SELECT BEST AVAILABLE TRANSMISSION RATE/
CODING SCHEME    455

CODE DATA PACKETS USING THE SELECTED
TRANSMISSION RATE/CODING SCHEME    460

# FIG. 4B

EP 1 420 539 A2

500

| HDR | IP DATAGRAM | TAIL |
|-----|-------------|------|

| HDR 510 | FRAGMENT 520 | HDR 512 | FRAGMENT 522 | HDR 514 | FRAGMENT 524 |
|---------|--------------|---------|--------------|---------|--------------|

530

| HDR 532 | ADPT 534 | PAYLOAD 536 | CRC 538 |
|---------|----------|-------------|---------|

550

| HDR 552 | BURST PAYLOAD 554 | TRLR 556 |
|---------|-------------------|----------|

## FIG. 5

EP 1 420 539 A2

532

| SEQ. # LOW 605 | BACKLOG IND. 610 | ADAPT. IND. 615 | FRAME NUM. 620 | BURST NUM. 625 | LGTH. FEC 630 | LENGTH 635 | SEQ. # HIGH 640 | START 645 | RSVD. 650 | TRAFFIC PRIORITY 655 | RSVD. 660 | BACKLOG 665 |
|---|---|---|---|---|---|---|---|---|---|---|---|---|

# FIG. 6

532

| BACKLOG IND. 710 | ADAPT. IND. 720 | START 730 | RSVD. 740 | TRAFFIC PRIORITY 750 | RSVD. 760 | ADAPTATION LENGTH 770 | SEQ. NUM. 780 | BACKLOG 790 |
|---|---|---|---|---|---|---|---|---|

**FIG. 7**